Europäisches Patentamt

European Patent Office

Office européen des brevets

(11) Publication number: **0 228 497**
**A1**

# (12) EUROPEAN PATENT APPLICATION

(21) Application number: 86100290.5

(22) Date of filing: 10.01.86

(51) Int. Cl.⁴: **C02F 9/00** , C02F 1/18 , B01D 23/10 , B01D 23/24

(43) Date of publication of application:
**15.07.87 Bulletin 87/29**

(84) Designated Contracting States:
AT BE CH DE FR GB IT LI LU NL SE

(71) Applicant: **Manojlovic, Vladimir, Dr.**
**Jurija Gagarina 162/25**
**Y-11070 Novi Beograd(YU)**

(72) Inventor: **Manojlovic, Vladimir, Dr.**
**Jurija Gagarina 162/25**
**Y-11070 Novi Beograd(YU)**

(74) Representative: **Patentanwälte Zellentin**
**Zweibrückenstrasse 15**
**D-8000 München 2(DE)**

(54) **A process for water purification, and a filter for carrying out the process.**

(57) The invention relates to a process of water purification by the application of procedures of coagulation, adsorption, filtration and desinfection, characterized in that the mixture of 20-50 mg/l of coagulator and 2-5 mg/l of activated pulverous coal is added to the water to be purified, and that such water, after 5-6 sec. of mixing, is filtered through the filter layer formed by plastic material of the fibrous structure selected from the group of polyacrylnitrates having fineness of 4,5-9,0 deniers and staple fibre length of 100-150 mm and porosity of 78-85%, and that the activated chlorine is added to the filtered water in the amount depending on the need of the water for chlorine, preferably 1-2 mg/l, and that the filter is regenerated after pollution by the reversed-current water and pressurized air, using a manual pump.

The invention relates also to a filter for carrying out the process according to claim1, characterized in that on the lid (1) of the vessel (2) for clean water, having the shape of vertical parallelepiped, is mounted the filter (3) of cylindrical shape with filtering material (4) consisting of plastic fibrous material which is situated between two perforated plates - (5,6) whereby the bottom (7) is fixed at a determined distance beneath the lower perforated plate (5) so to form a chamber (8), and that a short pipe (9) is fixed to the bottom (7) so to pass partially through bottom (7) while the opposite end thereof is free in the vessel (2) for clean water, and that the space (10) for collecting water to be purified is positioned above the upper perforated plate (5), and that the filter (9) is provided with a lid (12) while the vessel (2) for clean water is provided with a lid (11) and that a pipe (14) is fixed at the lower part of vessel (2) for clean water just above the bottom (13) of the said vessel (2).

Fig. 1

## A PROCESS FOR WATER PURIFICATION, AND A FILTER FOR CARRYING OUT THE PROCESS

Field of technique of the invention

This invention is intended for the purification of drinking water for hunters, fisherman, campers and various emergencies like earthquakes, floods, massive epidemics of contageous diseases and in the event of wars, etc (IPC: B 01D 23/00).

Technical problem

Presently in the world, there exist, for the above mentioned purposes, devices with activated charcoal, asbestos-cellulose, diatomaceous earth and various filtering papers as filtering materials. However, these devices, in spite of their good features, have a basic shortcoming: their filtering materials can not be regenerated, i.e. cleaned-washed and reused; after pollution they have to be replaced by new materials (the used filtering material is thrown away) after being used for 1-2 hours. This requires the supply of big quantities of new filtering material (the consumption is relatively large) and permanent transport to the place of application. Moreover, the devices are rather heavy for transport and relatively expensive. In addition, these materials in exceptional situations, particularly in war, can present critical materials because their production is connected to defined industry or starting points (possibility of destruction and destroy of industry, deposits, transport ways and the like).

State of the art

Known devices of movable type most widely used in the world today, are sand filters, diatomaceous filters, asbestos-cellulose filters, filters of porous baked elements, linen filters as well as varous combinations of them.

Already in the I. World War, in modern Armed Forces were applied mobile sand filters of the surface of about 0,14 square meter with filtration rate 40-60 1/min. But, today they are seldom used because they proved to be unsuitable due to their relatively large weight.

Apart from sand filters, during the II. World War started application of so-called diatomaceous filters which are used very often even today for a smaller number of consumers, mainly for requirements of Armed Forces in field conditions as well as for purification of water in swimming pools. They consist of closed steel cylinders in which are inserted perforated pipes wrapped by steel wire (or rings) and pulp of diatomaceous (Fuller's) earth used as filtering material. These filters are usually made for capacities from 75-120 (/min. per square meter of filter surface.

Asbestos-cellulose filters are made of various capacities, most often 75 l/h, 150 l/h and 550 l/h. They are used for water supplying for individuals and smaller groups of people. Their weight is from 18-80 kgs. Durations of one filtering paper of asbestos-cellulose is about 2 hours.

Filters of porous baked elements (metal, china, plastic material) are made with very fine pores. Their capacity is relatively small and pressure losses are large (a few atmospheres). After clogging, filter elements can be taken off and exposed to water steam in order to be washed, but washing is never efficient enough so it often happens that they cannot be used again.

Linen filters are most often used in lack of stated filtering materials. Quality of water achieved by these filters is quite lower and such devices are used only as an improvisation with water used only for a short time.

Basic shortcomings of these devices, i.e. stated filtering materials, as already said, are that they cannot be regenerated i.e. cleaned-washed and reused and for filtering through these materials only relatively pure waters can be considered. Besides, it is proved that asbestos fibres cause cancer and filters in which is used this material are already being put out of use throughout the world.

The above-mentioned shortcomings can be eliminated by the used of the processes and devices according for the invention which use for filtering specially treated plastics fibrous material with addition of relevant chemicals with pre-determined concentrations (coagulant, activated charcoal, chlorine, product).

Numerous and long-term testing showed that this type of filtering material with stated additives has exceptionally good filtering properties and according to its tactical and economic properties is far better than the usual filtering materials as: asbestos-cellulose, sand, diatomaceous earth etc.

Advantages of devices which use stated technology in process or purification of water are manifold:
-a high degree of purification is achieved;
-relatively small quantity of filtering material is needed (layer hight is only 7-8 cms), so devices have small volume and are very light and easily transportable;
- the filtering material is durable, i.e. it is not thrown away after use, but regenerated -cleaned very simply and very rapidly for reuse. The regeneration - cleaning is performed by opposite direction water flow and air under pressure with use of a small hand pump. Time needed for regeneration is 10-15 sec. and it is performed after each 1-2 hours of device operation.

Description of the solution of the technical problem

Essence of the solution of the technical problem is appliance of specially treated plastic fibrous material (polyacrylonitrile fibre, fineness 4,5-9,0 Den., staple length: 100-150 mm, porosity of formed filter 78-85%) for water filtering with previous addition of admixture of coagulation means in quantity of 20-50 mg/l and powdered activated charcoal in quantity of 2-5 mg/l to raw waters (from rivers, lakes, pools). After a short mixing of raw water to which stated additives are added, water is released through the device with filtering material of plastic fibrous material, which retains 98-100% suspended particles and microorganisms as well as the large part of other parameters as: ferro, manganese, magnesium, ammonia, nitrates etc. To the water purified in such way, 1-2 mg/l of active chlorine (natrium-hipochlorite, kaporite and the like) are added, which is sufficient for killing any remaining germs and obtaining value of residual chlorine in water from 0,2-0,5 mg/l, in order to prevent possibility of second-hand pollution of already desinfected water.

For stated technology for improvement of water quality is applied the device consisting of two main parts: one in which filtering material (filter) is placed and another for accumulation of pure water (vessel for pure water), which enables the device to operate as dischargeable (only part of device where the filtering material system is used) and accumulating (both parts of device are used).

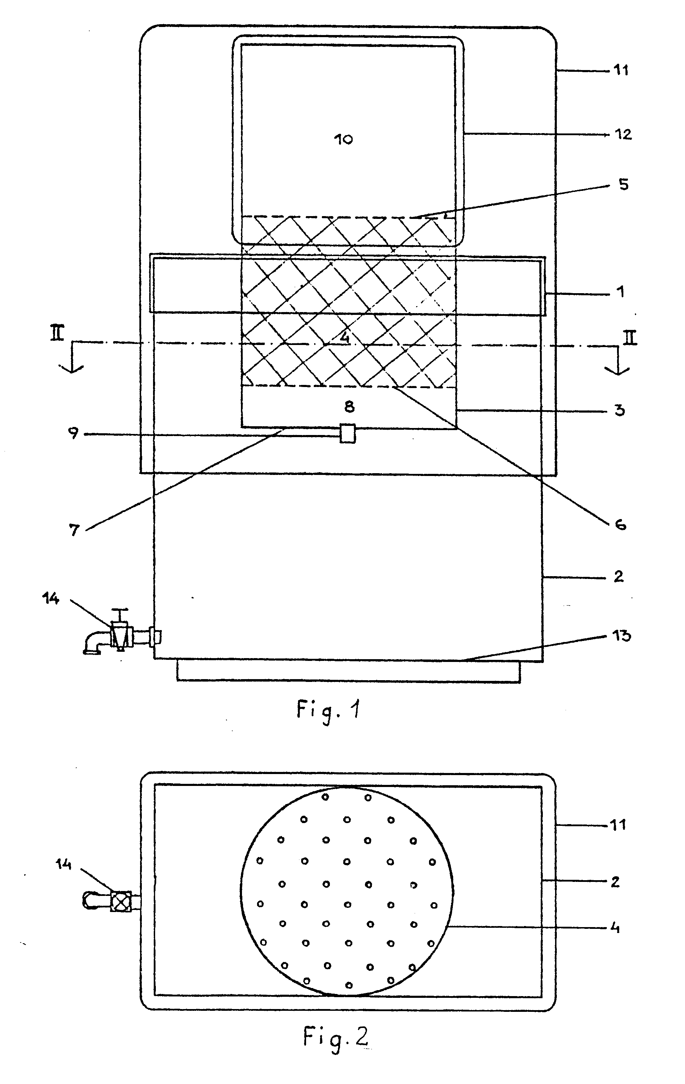

The Figure shows an example of construction of the device following the invention, whereby Figure 1 is showing the vertical cross-section of the device, and Figure 2 the horizontal section according to II-II line.

The parts of the device are interconnected in the following way:
On the lid 1 of the vessel 2 for clean water there is a built-in filter 3 consisting of littering material 4 made of plastic fibrous material placed between two perforated plates 5 and 6 in a distance which provides porosity of filtering material from 78-85%, with the bottom 7 welded to the lower end of the plates, forming in that way between the lower perforated plate 6 and bottom 7 filtering chamber 8, through which clean water passes during the filtering process i.e. air under pressure during the cleaning-regeneration of the filtering material. A short pipe 9 is fixed to the bottom 7 (or to the side of filter 3, between the lower perforated plate 6 and the bottom 7); this pipe brings clean water in the vessel 2 for clear water (or any other vessel for clean water when filter 3 operates as dischargeable) and it is also used as the connection between the hand rubber pump and filter 3 during cleaning of filtering material i.e. exhausting of impurity from the filtering material 4. Above filter 3 there is a lid 12 and above the lid 1 with filter 3 there is a lid 11 which is also used for bringing and pouring of crude water into the space 10 of the filter 3 when the device is in operation. Space 10 apart from being used for acceptance of crude water during the process of water filtering, is used also for storing of bottles with additives - (chemicals) when in solution or tablets when in solid state. To the lower part of vessel 2 for clean water, immediately above the bottom 13 of vessel 2, is fixed by nut, stop valve -cock 14.

The device functions in the following way: Take off the lid 11 and pour into it crude water (from river, lake, pool) to which then add mixture of coagulators in quantity of 20-50 mg/l and activated charcoal in powder in quantity of 2-5 mg/l. Then after a short mixing, pour the water with additives into space 10 of filter 3 with previous taking off of the lid 12. Then the coagulated water passes through the filtering material 4 made of plastic fibrous material, where it is liberated almost completely from suspended matter and micro-organisms (98-100%) as well as the large part of other parameters consisted in crude water, and then flows into vessel 2 for clean water where it is mixed with the necessary amount of chlorine, previously put into the vessel 2 for clean water, in the form of solution of chloringe tablets. After the contact between chlorine and water during some 15-20 minutes, this water can safely be used for drinking and for other needs.

After a couple of hours of device operation (the time depends on the degree of pollution of crude water) the filtering material 4 must be cleaned. The cleaning is done in the following way: filter 3 is first separated from the vessel 2 for clean water, then it is turned upside-down and by hand rubber pump connected with pipe 9, all dirt accumulated at the upper surface of the filtering material 4 together with the water which remained in the filtering material 4, is pumped out i.e. ejected out of the filter 3.

During device operating i.e. during the process of water filtering, the lid 1 with the filter 3 covers the vessel 2 for clean water; however, during the cleaning of the filtering material 4 the lid 1 together with the filter 3 is separated from the vessel 2 for clean water. Lids 11 and 12 cover the device only when it is out of operation i.e. when it is folded.

## Claims

1. A process of water purification, intended for the purification of drinking water by the application of procedures of coagulation, adsorption, filtration and desinfection, characterized in that the mixture of 2-50 mg/1 of coagulator and 2-5 mg/l of activated pulverous coal is added to the water to be purified, and that such water, after 5-6 sec. of mixing, is filtered through the filter layer formed by plastic material of the fibrous structure selected from the group of polyacrylnitrates having fineness of 4,5-9,0 deniers and staple fibre length of 100-150 mm and porosity of 78-85%, and that the activated chlorine is added to the filtered water in the amount depending on the need of the water for chlorine, preferably 1-2 mg/1, and theat the filter is regenerated after pollution by the reversed-current water and pressurized air, using a manual pump.

2. A filter for carrying out the process according to claim 1, characterized in that on the lid (1) of the vessel (2) for clean water, having the shape of vertical parallelepiped, is mounted the filter (3) of cylindrical shape with filtering material (4) consisting of plastic fibrous material which is situated between two perforated plates (5,6) whereby the bottom (7) is fixed at a determined distance beneath the lower perforated plate (5) so to form a chamber (8), and that a short pipe (9) is fixed to the bottom (7) so to pass partially through bottom - (7) while the opposite end thereof is free in the vessel (2) for clean water, and that the space (10) for collecting water to be purified is positioned above the upper perforated plate (5), and that the filter (9) is provided with a lid (12) while the vessel (2) for clean water is provided with a lid (11) and that a pipe (14) is fixed at the lower part of vessel - (2) for clean water just above the bottom (13) of the said vessel (2).

Fig. 1

Fig. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-4 277 343 (J.D. PAZ)<br>* Column 5, lines 18-33 *<br>--- | 1,2 | C 02 F 9/00<br>C 02 F 1/18<br>B 01 D 23/10<br>B 01 D 23/24 |
| Y | GB-A-1 601 380 (ARMAFILT EGYESÜLT MÜSZAKI TÖMITÖ ES GEPSZAKMAI IPARI SZÖVETKEZET)<br>* Claims 1-11 *<br>--- | 1,2 | |
| A | GB-A- 590 266 (PERMUTIT)<br>* Page 3, lines 46-121 *<br>--- | 1,2 | |
| A | US-A-2 335 458 (F. SENYAL)<br>* Whole document *<br>--- | 1,2 | |
| A | EP-A-0 013 445 (S. GODAR)<br>* Claims; figures 1-3 *<br>--- | 1,2 | |
| A | US-A-3 542 674 (G.R. MACHLAN)<br>* Claim 1; figure 4 *<br>--- | 1 | TECHNICAL FIELDS SEARCHED (Int. Cl.4)<br><br>C 02 F<br>B 01 D |
| A | US-A-3 645 402 (W. ALEXANDER et al.)<br>* Column 2, lines 11-14 *<br>----- | 1 | |

The present search report has been drawn up for all claims

| Place of search | Date of completion of the search | Examiner |
|---|---|---|
| THE HAGUE | 12-09-1986 | VAN AKOLEYEN H.T.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82